# NEW EUROPEAN PATENT SPECIFICATION

(11) **EP 2 914 121 B2**
(45) Date of publication and mention of the opposition decision: **18.11.2020**
(45) Mention of the grant of the patent: 04.04.2018
(21) Application number: 13783012.1
(22) Date of filing: 17.10.2013
(51) Int. Cl.: A23G 9/40, A23J 3/08, A23L 29/10, A23L 33/19

(54) **FROZEN CONFECTION PRODUCT**
GEFRORENES KONFEKT
PRODUIT DE CONFISERIE CONGELÉ

(30) Priority: 31.10.2012 WO PCT/US2012/062818
(43) Date of publication of application: 09.09.2015
(73) Proprietor: Société des Produits Nestlé S.A., 1800 Vevey (CH)
(72) Inventor: UMMADI, Madhavi, Fremont CA 94538-7022 (US); JOSHI, Nishant Ashok, Sioux City, Iowa 51108 (US); TAPFER, Karl Uwe, Danville, California 94526 (US); KOLODZIEJCZYK, Eric Stanislas, CH-1800 Vevey (CH)
(74) Representative: Plougmann Vingtoft a/s
(86) International application number: PCT/EP2013/071727
(87) International publication number: WO 2014/067790

(56) References cited:
- EP-A1- 0 438 201
- EP-A1- 1 880 612
- EP-B1- 2 413 705
- WO-A1-2010/112255
- US-A1- 2006 280 779
- US-A1- 2010 068 293
- US-A1- 2010 247 723
- US-A1- 2011 311 703
- DATABASE GNPD [Online] MINTEL; April 2006 (2006-04), "Ice Cream - Neslté Mövenpick La Suprema "Buttermilch Aloe Vera"", XP002699869, Database accession no. 521212
- MARCELADE REZENDE COSTA ET AL: "Use of ultrafiltration and supercritical fluid extraction to obtain a whey buttermilk powder enriched in milk fat globule membrane phospholipids", INTERNATIONAL DAIRY JOURNAL, vol. 20, no. 9, 1 September 2010 (2010-09-01), pages 598-602, XP055068772, ISSN: 0958-6946, DOI: 10.1016/j.idairyj.2010.03.006
- S-H KIM ET AL: "Effect of whey pretreatment on composition and functional properties of whey protein concentrate", JOURNAL OF FOOD SCIENCE, vol. 54, no. 1, 1 January 1989 (1989-01-01), pages 25-29, XP055069119,
- MARSHALL R T ET AL: "Ice Cream. Chapter 4. Composition and Properties, Fifth Edition", ICE CREAM, XX, XX, 1 January 2000 (2000-01-01), pages 22-23,28, XP002282748,
- BUND et al.: "Blends of delactosed permeate and pro-cream in ice cream: Effects on physical, textural and sensory attributes", Int. Dairy J., vol. 31, 18 March 2013 (2013-03-18), pages 132-138,
- LEVIN et al.: "Whey protein phospholipid concentrate and delactosed permeate: Applications in caramel, ice cream and cake", J Dairy Sci., vol. 99, 2016, pages 6948-6960,
- "Whey protein concentrate", Tetrapak reference, Retrieved from the Internet: URL:https://www.tetrapak.com/findbyfood/wh ey-powder/whey-protein- concentrate
- Sigma Aldrich characterisation data of gluconic acid, pages 1-2, Retrieved from the Internet: URL:https://www.sigmaaidrich.com/catatog/p roduct/mm/822057?lang=en&tregion= GB #
- H. GOFF et al.: "Ice Cream", 2013 pages 76-77,
- Goff et al: "Ice Cream", 2013 pages 14-15,35,126,
- Kimberlee et al: "Coproducts of Milk and Whey Processing", U.S. Dairy Export Council & Dairy Research Institute, May 2014 (2014-05),
- publication date of D14
- Eisner et al: "Colloids and Surfaces A: Physiochem Eng Aspects", , 2005, pages 203, 390-399,

## Description

### Technical field

The present disclosure relates to pasteurised frozen confection products. In particular, the disclosure relates to pasteurised frozen confection products comprising a whey protein phospholipid concentrate.

Furthermore, the present disclosure relates to a method of preparing a frozen confection product comprising a whey protein phospholipid concentrate.

### Background of the invention

Frozen confections such as ice cream are popular products. The products are especially popular amongst consumers at summertime, but are also popular during other seasons.

Increasingly, consumers of frozen confections demand cleaner and all natural products.

Consumers demand products which are free of artificial (non-natural) emulsifiers and stabilisers. However, most frozen confection products currently on the market contain non-natural emulsifiers and/or stabilizers.

Furthermore, there is an existing demand from consumers of frozen confections to buy frozen confections prepared from low fat formulations, while maintaining their good sensorial properties or even improve the sensory attributes.

The prior art discloses ways of improving the texture of low fat frozen confection products prepared by conventional freezing through the use of specific emulsifiers. However, these emulsifiers are often perceived negatively by the consumer and solutions that get rid of such "chemical sounding" ingredients are highly sought after.

In the prior art the use of egg yolk as an emulsifier in frozen desserts is also described. However, egg adds an allergen into the products and into the manufacturing system which needs an additional wash-out step. Allergens in food products are therefore to be excluded.

Another natural emulsifier prior used in frozen desserts are acacia gum. However, acacia gum, also called gum arabic, is perceived negatively by many consumers, especially in some parts of Europe and therefore also to be excluded.

Besides, consumer demand continuously increases for natural products which can be conceived as "better for you" products with lower fat contents or even non-fat products, while not compromising on the taste.

Hence, there is an unmet need for frozen confections which are free from stabilizers, non-natural emulsifiers, egg and acacia gum and which have improved sensorial properties.

### Summary of the invention

Thus, an object of the present disclosure relates to providing frozen confections which are devoid of stabilizers, artificial emulsifiers and allergens.

In particular, it is an object of the present disclosure to provide frozen confections which is devoid of artificial emulsifiers, stabilizers and allergens, using minimal amounts of ingredients and at the same time have a very light, creamy, and smooth texture, preferably with an overrun of over 100%. Furthermore, it is an object of the present disclosure to obtain a frozen dessert with an improved flavour and a more stable foam structure than prior art frozen desserts.

In addition, it is an object of the present disclosure to obtain a frozen confection products with improved heat shock resistance.

Furthermore, it is an object of the present disclosure to provide frozen confections which have an improved flavour delivery.

Over the recent years, consumers of frozen confections are becoming more and more demanding and conscious about what to eat and consumers tend to prefer products with fewer additives or totally avoid additives. Thus, consumers are more and more seeking products that contain a minimum of ingredients on their label, i.e. has a clean label. By formulating products without stabilizers and emulsifiers, the inventors of the present invention satisfy both consumer needs. Further, some natural emulsifiers, such as egg yolk, have the drawback of containing saturated fat, cholesterol and also from a manufacturing point of view as containing a potential allergen. These natural emulsifiers are therefore also to be avoided in frozen confections.

Thus, one aspect of the invention relates to a pasteurised frozen aerated confection product comprising one or more proteins and a whey protein phospholipid concentrate wherein the amount of phospholipid in the whey protein phospholipid concentrate is at least 10% and wherein the product is free of any artificial or non-natural emulsifier and the product is free of stabilizer, and the product is free of acacia gum and egg, and wherein the product further comprises a pH adjusting agent, and wherein the pH adjusting agent is Glucono-Delta-Lactone in an amount of 0.1 to 0.3 % by weight, wherein the product comprises the whey protein phospholipid concentrate in an amount of 0.1 to 10.0% by weight, wherein the product has an overrun of 100 to 130%, and wherein the product comprises from 0.5 to 16% fat by weight.

The inventors of the present invention have surprisingly found that by using a whey protein phospholipid concentrate in preparing pasteurised frozen confections according to the present invention, artificial emulsifiers and stabilizers can be avoided, and at the same time obtaining a pasteurised frozen confection having a smooth and creamy texture and which are heat shock stable.

Furthermore, the inventors of the present invention have surprisingly found that by using a whey protein phospholipid concentrate, in preparing a pasteurised frozen confection product and prepare the product by extruding through a low temperature extruder, a product with improved sensorial texture is obtained. Furthermore, it is possible by the present invention to prepare low fat ice creams with a rich and creamy texture.

Therefore, the consumers' demand of products with a clean label, i.e. free of additives such as artificial emulsifiers, stabilizers and allergens, is met.

Another aspect of the present invention relates to a method of producing a frozen confection product having an overrun of 100 to 130%, the method comprising the steps of:
a) providing an ingredient mix comprising 0.1 to 10% by weight of whey protein phospholipid concentrate wherein the amount of phospholipid in the whey protein phospholipid concentrate is at least 10%, from 0.5 to 16% fat by weight and 0.1 to 0.3 % by weight of pH adjusting agent being Glucono-Delta-Lactone, and the mix being free of any artificial or non-natural emulsifier and the mix being free of stabilizer, and the mix being free of acacia gum and egg;
b) homogenising the mix;
c) pasteurising the mix
d) freezing the pasteurised mix to form the aerated frozen confection product
e) optionally hardening the mix.

The present invention will now be described in more detail in the following.

### Brief description of the figures

Figure 1 shows a confocal microscopy picture of protein and fat agglomeration in the bulk phase of a melted full fat ice cream sample processed with addition of a whey protein phospholipic concentrate (WPPC) and standard freezing.
Figure 2 shows a confocal microscopy picture of protein and fat agglomeration in the bulk phase of a melted full fat ice cream sample processed with addition of acacia gum as emulsifying agent and no WPPC and standard freezing.
Figure 3 shows a confocal microscopy picture of air bubbles in the bulk phase of a melted full fat ice cream sample processed with addition of whey protein phospholipid concentrate (WPPC), pH adjustment before pasteurization and standard freezing followed by low temperature freezing.
Figure 4 shows a confocal microscopy picture of a sample of a melted full fat ice cream sample processed with addition of acacia gum as emulsifying agent, pH adjustment before pasteuirzation and standard freezing followed by low temperature freezing.
Figure 5 shows a microscopy picture of a sample of a melted full fat ice cream sample processed with addition of WPPC and standard freezing.
Figure 6 shows a microscopy picture of a sample of a melted full fat ice cream smaple processed with addition of acacia gum as emulsifying agent, and standard freezing

The present invention will now be described in more detail in the following.

### Detailed description of the invention

Prior to discussing the present invention in further detail, the following terms and conventions will first be defined.

In the context of the present invention, mentioned percentages are weight/weight percentages unless otherwise stated.

Numerical ranges as used herein are intended to include every number and subset of numbers contained within that range, whether specifically disclosed or not. Further, these numerical ranges should be construed as providing support for a claim directed to any number or subset of numbers in that range. For example, a disclosure of from 1 to 10 should be construed as supporting a range of from 1 to 8, from 3 to 7, from 4 to 9, from 3.6 to 4.6, from 3.5 to 9.9, and so forth.

In the context of the present invention, the term "ratio" by weight (weight/weight) refers to the ratio between the weights of the mentioned compounds. For example, a mixture comprising 60 g whey protein phospholid concentrate (WPPC) and 40 g glucono-delta-lactone (GDL) would have a weight ratio which is equal to 60:40, which is equal to 3:2 or 1.5 (that is 3 divided with 2). Similarly, a mixture of 50 g WPPC and 50 g GDL would have a ratio by weight of WPPC and GDL of 50:50, which is equal to 1:1 or 1 (that is 1 divided with 1).

Unless defined otherwise, all technical and scientific terms used herein have the same meaning as commonly understood by one skilled in the art (e.g. in frozen confection manufacture). Definitions and descriptions of various terms and techniques used in frozen confection manufacture are found in ice Cream, 6th Edition, Robert T Marshall, H. Douglas Goff and Richard W Hartel (2003), Kluwer Academic/Plenum Publishers.

### Frozen confection product:

In the context of the present invention the term "frozen confection product" means a confection product comprising ice crystals distributed throughout a sweetened and/or flavoured aqueous product and typically having a refreshing and cooling effect with a nice appearance.

Frozen confections include water in the form of ice crystals and are for consumption in a frozen or semi-frozen state, i.e. under conditions wherein the temperature of the product is less than 0°C, and preferably under conditions wherein the product comprises a significant amount of ice crystals.

Frozen confections may also be called "frozen confections", "frozen confection products", "ice desserts" or "frozen desserts" and these terms may be used interchangeably. The frozen confection product of the invention is an aerated frozen confection product as specified in the claims, in particular a frozen dairy dessert. By the term "frozen aerated confection product" is meant any aerated frozen dessert.

In the context of the present invention, the term "aerated" refers to a product which has air cells distributed evenly throughout the product. The air cells or air bubbles can be distributed throughout the product for example by extrusion or whipping air into the product, e.g. whipping of air into an ice cream mix. For example one volume part of air whipped into one volume part of ice cream mix is equal to 100% overrun, as described by Marshall, Goff and Hartel.

Overrun relates to the amount of air whipped in to an ingredient mix for preparing aerated products. Overrun is a term generally recognized for the skilled person within the field of ice cream production and in the present invention overrun is defined as the increase in volume, in percentage, of ice cream greater than the volume of the mix used to produce that ice cream. In other words, if you start off with 1 litre of mix and you make 2.0 litres of ice cream from that, you have increased the volume by 100% (i.e., the overrun is 100%).

In an embodiment of the disclosure the frozen confection may be selected from the group of frozen dairy dessert, cultured frozen dairy dessert, ice cream, non-fat ice cream, low-fat ice cream, frozen yoghurt, milk shake, milk ice, and sherbet.

In a preferred embodiment, the pasteurised frozen confection product is an ice cream, which may be a full fat ice cream, low fat ice cream and fat free ice cream The frozen confection product comprises from 0.5% to 16% fat by weight.

In another embodiment of the present invention, the confection product is a low fat product and comprises at most 6% fat.

In the context of the present invention, the term "fat" should be interpreted broadly and generally relates to one or more triglycerides independent of their melting temperature. The term "fat" comprises both triglycerides that are in liquid form at 25°C, as well as triglycerides that are in solid or semi-solid form at 25°C. Fatty acid triesters of the trihydroxy alcohol glycerol which are present in plant and animal tissues that can occur both as liquid or semi-liquid or solid fat forms. The physical and chemical properties of fats and oils depend on the nature of the fatty acids present. Saturated fatty acids give higher-melting fats and represent solid fats, for example, lard and butter. Unsaturation lowers the melting point of fatty acids and fats, e.g. plant oils, contain large amounts of unsaturated fatty acids.

### Whey protein phospholipid concentrate:

A whey protein phospholipid concentrate (WPPC) is a whey protein concentrate rich in phospholipids. A whey protein phospholipid concentrate may be derived from whey by filtration. WPPC is a powder preferably derived from Sweet Whey using cold filtered technology. This powder is a superior source of protein, immunoglobulin, conjugated linoleic acid (CLA) and an excellent amino acid profile. The amount of phospholipid in the whey protein phospholipid concentrate is at least 10%, such as at least 12%, preferably at least 15%, such as at least 17%, even more preferably at least 20%.

The frozen confection product according to the present invention comprises phospholipid in an amount from 0.1% to 1.0% by weight.

The frozen confection product according to the present invention is rich in phospholipids as compared to conventional frozen confections comprising traditional emulsifiers and stabilizers normally used for emulsifying frozen confections, but not containing any whey protein phospholipid concentrate.

The inventors of the present invention have surprisingly discovered that by using a whey protein phospholipid concentrate to emulsify frozen confections, it is possible to avoid the use of any other emulsifiers or stabilizers. Furthermore, a product is obtained which has improved sensorial properties. For example the obtained product has an increased creaminess and rich full body, reduced ice crystal size and an improved heat shock resistance as observed in stability tests. Furthermore, the obtained frozen confection product will have an enhanced flavour since the product is free of the flavour absorbing emulsifiers, stabilisers and gums. Gums such as acacia gums, emulsifiers and stabilisers will inhibit the release of flavour.

The whey protein phospholipid concentrate may be in different forms, such as a powder, liquid, gel, or paste.

In a preferred embodiment of the invention, the frozen confection product comprises whey protein phospholipid concentrates in an amount from 0.2 to 5.0%, such as from 0.2 to 2.5%, even more preferably from 0.2 to 1.5% by weight.

### Protein:

The confection product according to the present invention comprises one or more proteins. The protein(s) may be selected from any dairy protein and plant protein.

In a preferred embodiment of the present invention, the protein is a dairy protein. The protein may also be a plant protein such as soya protein, pea protein, wheat protein, corn protein, and rice protein, proteins from legumes, cereals and grains in general. The protein may also be protein isolates from nuts or seeds.

In another embodiment of the present invention, the protein includes a partially coagulated protein system including kappa-casein and beta-lactoglobulin.

The term "partially coagulated protein system" is to be understood to mean a complex or an aggregate resulting from at least a partial coagulation of proteins present in the ingredient mix, for instance induced by the presence of an acidifying agent combined with a heat treatment.

Most milk proteins (mainly caseins) in their native state remain in colloidal suspension form leading to minimal changes in mix viscosity (~200-400 cp). However, when proteins are subjected to controlled exposure to known amounts of heat and acid (e.g., pH of 6.1 or less and pasteurization) they undergo coagulation. Coagulation is a state where the proteins are hydrated resulting in a three dimensional network (soft gel) causing increased mix viscosity (~199-2400 cp). If the exposure of proteins to heat and acid is not controlled, this phenomenon could lead to precipitation (e.g. syneresis in yoghurt).

The inventors of the present invention have surprisingly found that when adding a whey protein phospholipid concentrate to an ice cream mix including a partially coagulated protein system, for example addition of an acidifying agent to an ice cream mix comprising dairy proteins, a product with improved sensorial properties is obtained as compared to products only comprising an acidifying agent and no whey protein phospholipid concentrate and as compared to products with a whey protein phospholipid concentrate but no acidifying agent added. Without being bound by any theory, it is believed that this is due to the fact that the protein aggregation is synergistically increased in products comprising a whey protein phospholipid concentrate and an acidifying agent as compared to products only comprising either a whey protein phospholipid concentrate or an acidifying agent.

Without being bound by any theory, it is believed that partial coagulation of proteins within the ice cream mix is providing freshly coagulated proteins that act as a natural stabilizer for the air cells and enable creation of a very fine and stable microstructure resulting in a smooth, rich and creamy product without the use of artificial or non-natural emulsifiers or stabilisers or similar additives. This makes the products more natural and desirable for consumers who wish to minimize their intake of such artificial or non-natural additives.

In particular, the synergistic effect of the freshly coagulated proteins obtained by addition of a whey protein phospholipid concentrate, and preferably in combination with a pH adjusting agent (acidifying agent), obtained in combination with low temperature freezing technology is therefore leading to superior products in terms of texture and stability.

Preferably, the proteins are dairy proteins which are usually present in an ice cream mix and which comprises casein and whey proteins. Such proteins may undergo partial coagulation.

### pH adjusting agent:

The product according to the invention comprises a pH adjusting agent. The pH adjusting agent is in the context of the present invention an acidifying agent.

The pH adjusting agent will as described earlier result in coagulation or aggregation of the proteins present in the ingredient mix for preparing the frozen confection product.

The pH adjusting agent is added in an amount such as to obtain a pH in the products in the range of 5.0 to 6.5, preferably in the range of 5.1 to 6.3, such as in the range of 5.3 to 6.0, even more preferably in the range of 5.4 to 5.9, such as in the range of 5.5 to 5.8.

When the protein system is partially coagulated prior to addition to the other components, the pH can be as high as 6.4 without detracting from the organoleptic properties of the product.

The inventors of the present invention have surprisingly found out that when using a whey protein phospholipid concentrate in combination with a pH adjusting agent such as e.g. glucono-delta-lactone, an increased aggregation of protein will be obtained as compared to products only comprising either a whey protein phospholipid concentrate or a pH adjusting agent. By protein aggregation the large milk proteins structure in an ice cream mix is broken into smaller proteins, i.e. the proteins are un-folded. These unfolded proteins have the ability to increase the water holding capacity and form a unique 3-D network, i.e. trap water and small fat particles inside them. This results in increasing mix viscosity and making an ice cream mix which is thick and viscous when extruded through the low temperature freezer (LTF), and which helps the ice cream product to attain a unique smooth and creamy texture that mimics the presence of higher fat levels.

Further, the use of artificial emulsifiers, stabilizers, acacia gum and egg yolk can be fully avoided, while maintaining a stable creamy foamed product.

Thus, the product is free of any artificial or non-natural emulsifier or stabilizer.

The product is free of acacia gum and other stabilizers.

Furthermore, the product is free of egg, such as egg yolk or egg white.

The pasteurised frozen confection product comprises glucono-delta-lactone as a pH adjusting agent in an amount of 0.1 to 0.3% by weight.

In the context of the present invention, the term "mild acid" refers to acids which have slow and mild acidification capabilities. A "mild acid" is a weak acid and hereby is to be understood an acid which partially dissociate ions as compared to strong acids, e.g. hydrochloric acid, which has a complete dissociation of ions. Strong acids have a pKa below 0.0. For example hydrochloric acid has a pKa of - 7.0 and sulphuric acid has a pKa of -10.0. On the contrary weak acids have a pKa above 0.0 and preferably in the range of 2.5 to 7.0. For example acetic acid has a pKa of 4.74 and gluconic acid has a pKa of 3.70.

In a further embodiment of the invention, the ratio between the whey protein phospholipid and the pH adjusting agent is from 2:1 to 30:1, such as from 5:1 to 20:1, preferably from 7:1 to 15:1, even more preferably 10:1. By using a whey protein phospholipid concentrate as an emulsifying agent in combination with acidification with glucono-delta-lactone a synesgistic effect of protein coagulation is obtained, resulting in an even better creamy texture.

The applicant of the present invention has surprisingly discovered that when using whey protein phospholipid concentrate as an emulsifying agent in frozen confection products in combination with a pH adjusting agent, a product essentially or completely free of artificial emulsifiers, stabilizers, acacia gum and egg can be prepared which at the same time has an improved texture and mouthfeel. Further, the product has an improved flavour release as it is free of other emulsifiers, gums, stabilizers which inhibit flavour release. This new composition for preparation of frozen desserts can be manufactured on a conventional primary freezer and still give a creamy, and light texture, even when prepared with an overrun above 100%. However, when using a low temperature extrusion and/or low temperature freezing, a product with an even better texture can be prepared having a rich creamy texture.

Further, the reduction of fat in frozen confections without compromising the indulgent quality of the product is one of the main challenges faced by the industry. The present invention is overcoming this issue on providing low fat products with similar texture and sensory attributes as those having higher fat contents in terms of creaminess and flavour delivery.

### Emulsifiers/stabilisers:

According to a specific embodiment of the disclosure the product essentially consists of a natural ingredients. The term "essentially consist" means that at least 95% of the ingredients have to be natural, such as at least 97%, preferably at least 98%, even more preferably at least 99%.

The term "natural ingredients" refer in the context of the present invention to ingredients of natural origin. These include ingredients which come directly from the field, animals, etc. or which are the result of a physical or microbiological / enzymatic transformation process. These therefore do not include ingredients which are the result of a chemical modification process.

The product of the invention is free of any artificial or non-natural emulsifier and it is free of stabilizer. Examples of artificial and non-natural ingredients which are avoided in a particular embodiment of the invention include for example the following emulsifiers; mono- and diglyceride of fatty acids, acid esters of mono- and diglycerides of fatty acids such as acetic, lactic, citric, tartaric, mono- and diacetyl tartaric acid esters of mono- and diglycerides of fatty acids, mixed acetic and tartaric acid esters of mono- and diglycerides of fatty acid, sucrose esters of fatty acids, polyglycerol esters if fatty acids, polyglycerol polyricinoleate, polyethylene sorbitan monooleate, polysorbate 80 and, chemically extracted lecithins.

The term "artificial emulsifiers" may also be referred to as synthetic emulsifiers or non-natural emulsifiers and the terms may be used interchangeably.

Chemically modified starches which are used in the art as stabilizers are also preferably avoided. These include for example modified starch, monostarch phosphate, distarch phosphate, phosphate or acetylated distarch phosphate, acetylated starch, acetylated distarch afipate, hydroxyl propyl starch, hydroxypropyl distarch phosphate, acetylated modified starch.

The products of the present disclosure are preferably essentially free of the preceding synthetic esters and modified starches. "Essentially free" means in the context of the present application, that these material are not intentionally added for their conventional property imparting abilities, e.g. stabilizing, although there could be unintended minor amounts present without detracting from the performance of the products. Generally and preferably, the products of the invention will not contain any non-natural materials.

By the term "essentially free" is therefore meant that the product comprise 2% by weight or less of a given compound, such as 1% by weight or less of a given compound.

The product is free of egg, such as free of egg yolk. Buttermilk and rice bran extracts are natural emulsifiers known in the art to be used in emulsifying frozen desserts. These natural emulsifiers have the advantage of conferring to the finished product a smoother texture and stiffer body which improve the whipping efficiency. The presence of natural emulsifiers results in air cells that are smaller and more evenly distributed throughout the internal structure of the ice cream. However, some natural emulsifiers have a negative perception by the consumer, such as acacia gum. Egg yolk as natural emulsifier has the problem of containing allergens which will be distributed throughout the product. Thus, these kind of natural emulsifiers are undesirable for consumers. In the present invention, a whey protein phospholipid concentrate is used to emulsify the product, which surprisingly has shown to provide a smooth creamy texture and possible to be used in products with a high overrun, such as above 100% and by conventional primary freezers. Further, a whey protein phospholipid concentrate can surprisingly be used without the addition of any other emulsifier or stabilizer.

Further, an increased flavour release is obtained by the product comprising a whey protein phospholipid concentrate and no other emulsifier or stabilizer, since the whey protein phospholipid concentrate do not inhibit flavour release as non-natural emulsifiers, gums and stabilizers do.

### Additional ingredients:

Preferably, the product comprises 0.5 to 5.5% fat which is representative of a low-fat or non-fat product.

Milk-solid-non-fat (MSNF) includes protein, carbohydrates and ash (minerals) in a dairy product. The protein content in MSNF is normally about 45%.

In the context of the present invention, the term "sweetening agent" means any compound bringing sweetness to the final product. Further, the sweetening agent enhances the flavour of the frozen confection prepared from the composition. Sweetening agent includes natural sugars like cane sugar, beet sugar, molasses, other plant derived nutritive sweeteners and non-nutritive sweeteners.

Examples of sweetening agent are sugar, sugar alcohol, natural sweetener, artificial sweetener and combinations thereof.

The product may additionally comprise flavourings, colourings, water or any mixtures thereof. Such flavourings or colourings, when used, are preferably selected from natural ingredients. These are used in conventional amounts which can be optimized by routine testing for any particular product formulation.

In a further embodiment of the invention, the product is free of polysaccharides. Polysaccharides are mainly hydrocolloids, and they are disliked by many consumers. In ice cream polysaccharides, mainly hydrocolloids, are used to modulate the texture. The consumers prefer textural attributes in ice creams, such as ice cream having a smooth, creamy texture will be perceived as the right mouthfeel. When polysaccharides are overused in ice cream production, they can contribute to a gummy, sticky or chewy texture than consumers dislike.

The product according to the present invention furthermore has more and smaller air bubbles than a product produced without whey protein phospholipid concentrate but for example with acacia gum. A product having many, but smaller sized air cells distributed throughout the product will coalesce slower and therefore have an improved foam stability.

The pasteurised frozen confection product according to the present invention is obtainable by freezing with a standard continuous industry freezer, such as a Taylor freezer, which freezing preferably is followed by low temperature freezing.

### Method:

An aspect of the present invention related to the method of producing a frozen aerated confection product having an overrun of 100 to 130%, the method comprising the steps of:
a) providing an ingredient mix comprising 0.1 to 10% by weight of whey protein phospholipid concentrate wherein the amount of phospholipid in the whey protein phospholipid concentrate is at least 10%, from 0.5 to 16% fat by weight and 0.1 to 0.3 % by weight of pH adjusting agent being Glucono-Delta-Lactone, and the mix being free of any artificial or non-natural emulsifier and the mix being free of stabilizer, and the mix being free of acacia gum and egg;
b) homogenising the mix;
c) pasteurising the mix
d) freezing the pasteurised mix to form the aerated frozen confection product
e) optionally hardening the mix.

The inventors of the present invention have surprisingly found out the method will enhance the textural experience of frozen dairy systems even at lower fat and calorie contents.

The applicant has found that when using a whey protein phospholipid concentrate as an emulsifying agent in preparing a frozen confection product, good sensorial properties of a frozen confection product can be obtained, such as improved sensorial hedonic score, improved heat shock, a smaller air bubble size, an increased number of air bubbles, and a decreased ice crystal size.

Further, applicant has surprisingly found that when using a whey protein phospholipid as an emulsifying agent, no other emulsifiers or stabilizers are needed. Thus, in an embodiment of the present invention, the frozen confection product according to the present invention is free of any non-natural emulsifiers and it is free of stabilizers. Further, the frozen confection product may be free of any other natural emulsifier and stabilizer such as egg, egg yolk and acacia gum.

The term "air bubbles" refer in the context of the present invention to air cells.

The process of the invention has surprisingly proven to enhance the textural experience of frozen dairy systems even at lower fat and calorie levels. The applicant has discovered that the use of a whey protein phospholipid concentrate and optionally a controlled reduction of the pH of the mix before processing combined with an optimized mix parameter results in a product with smooth, creamy texture and superior flavour release when compared to typical low temperature extruded products. Without being bound by any theory, it is believed that during the process, protein structure changes as heat unfolds whey proteins and acidic conditions destabilize casein micelles. The modified protein forms a controlled network that binds water and fat globules while increasing mix viscosity to create a uniquely smooth and creamy texture that mimics the sensory attributes of higher fat products.

This effect is not observed when for example whey protein is denatured and further added to an ice cream mix as disclosed in the prior art. It has been measured by the applicant in such a case that whey proteins remain mostly in the soluble phase. The method of the invention relates to producing a frozen aerated confection product as defined in the claims. Continuous Pasteurization is performed under standard conditions and may be carried out prior to or after homogenisation. Preferred pasteurisation conditions include heating to a temperature between 75°C to 90°C, such as between 80°C to 90°C, even more preferably between 83°C to 87°C for a period of 30 to 120 seconds, preferably from 30 to 60 seconds.

Batch Pasteurization is preferably performed by heating to a temperature between 69°C to 85°C, such as between 70°C to 80°C for a period of 30 to 120 minutes. Homogenisation can be done either prior or after pasteurization. It is preferably carried out under standard conditions, namely at a pressure of between 40 and 200 bars, preferably between 100 and 150 bars, more preferably between 120 and 140 bars.

The homogenised mix may then be cooled to around 2 to 8°C by known means. The mix may further be aged for 4 to 72 hours at around 2 to 6°C with or without stirring. Optionally, the addition of flavourings, colourings, sauces, inclusions etc. may be carried out prior to the ageing step. If flavourings, colourings, sauces, inclusions etc. are added, these are preferably selected from natural ingredients only.

In the next step, the mix is frozen. In an embodiment of the invention the freezing is made while aerating the pasteurised mix. In a preferred embodiment, the mix may be cooled to a temperature below -3°C, preferably between -3 and - 10°C, even more preferably between at about -4.5 to -8°C with stirring and injection of a gas to create a desired overrun.

The aerating is performed to an overrun from 100 to 130%.

In a preferred embodiment of the invention, the method comprises a step of adjusting the pH of the mix before pasteurization, in particular adjusting the pH of the mix with an acidifying agent to a pH in the range of 5.0 to 6.5.

In another preferred embodiment of the invention, the method comprises a step of adjusting the pH of the mix after pasteurization, in particular adjusting the pH of the mix with an acidifying agent to a pH in the range of 5.0 to 6.5, preferably 5.0 to 5.6.

The aerated mix is then subjected to freezing either by using standard continues freezing equipment or by using a low temperature extrusion system. In this equipment, the aerated mix is cooled by extrusion at a temperature of below - 11°C, preferably between -12°C and -18°C in a screw extruder. The screw extruder may be such as that described in WO 2005/070225. The extrusion may be performed in a single or multi screw extruder.

The frozen mix is then packaged and stored at temperatures colder than -20°C, where it will undergo hardening step during storage. Alternatively, it can be hardened by accelerated hardening step, for example via a hardening tunnel, carried out at a temperature between -20°C to -40°C for a sufficient time to harden the product.

The method of the invention lends itself to the manufacture of frozen confections which are shelf-life stable at the necessary storage temperatures and have superior organoleptic and textural properties.

### The freezer

In an embodiment according to the present invention, the freezing in step d) is made by using a standard continuous industry freezer, such as a Taylor freezer.

In a preferred embodiment of the invention, the primary freezing step in step d) is followed by a step of low temperature freezing. The low temperature freezing, may also be termed low temperature extrusion, is reducing the product temperature from -10°C to -18°C.

A low temperature extruded frozen confection product comprising a whey protein phospholipid concentrate is thus another object of the present disclosure. A further object is to provide a low temperature extruded frozen confection product comprising a whey protein phospholipid concentrate and a pH adjusting agent.

Low-temperature extrusion is a known process which imparts to the final product a specific and advantageous microstructure. For instance, ice crystal size and air bubble size tend to be smaller than in traditional manufacturing processes. On the other hand, the size of fat globules does not change significantly when LTE process is used.

The products of the present invention comprising a whey protein phospholipid concentrate surprisingly resulted in a product with an even better structure with low temperature extrusion than compared to existing low temperature extruded products.

With whey protein phospholipid concentrates as the only emulsifier, it is possible to produce a frozen confection being stable and having a high overrun even when extruded through a low temperature freezer or a conventional freezer.

In a preferred embodiment of the invention, the freezing is made first through a primary conventional freezer and then through a secondary low temperature freezer to achieve a creamy frozen dessert.

Products known which are made by low temperature freezing are described in US 2007/0196553. For instance, ice crystal size and air bubble size tend to be smaller than in traditional manufacturing processes. Ice crystals, air cells, fat globules and agglomerates thereof shall be in a specific diameter range in order to enhance positive sensory and stability characteristics.

The low-temperature extruded frozen confection products of the present invention have a smoother mouth feel and have particularly appealing textural and organoleptic properties, compared to low temperature extruded products known to date. Besides the frozen confection product of the present disclosure is free of stabilizers, non-natural emulsifiers, egg yolk and acacia gum.

It has surprisingly been found out by the inventors of the present invention that a low temperature extruded product comprising a whey protein phospholipid concentrate and a pH adjusting agent, substantially improves the sensory profile of the product. In particular the product has an improved smooth and creamy texture.

The inventors of the present invention believe that this improved sensorial profile is due to the improved protein aggregation in products comprising both a whey protein phospholipid concentrate and a pH adjusting agent, such as glucono-delta-lactone.

The invention will now be described in further details in the following non-limiting examples. Examples not within the extent of the claims are provided for reference.

### Examples

### Example 1 A full fat frozen dairy dessert comprising acacia gum and produced by standard freezing (not low temperature freezing) (not according to the invention)

In the following table an ice cream recipe is given.

### Ingredients:

| Ingredients | Wt% of final product |
|---|---|
| Fat | 10.5 |
| MSNF | 10.0 |
| Sugar | 18-22 |
| Acacia gum | 0.1-0.35 |
| MSNF refers to a milk-solid-non-tat | |

### Example 2 A low fat frozen dairy dessert comprising acacia gum and produced by low temperature freezing (not according to the invention)

In the following table, an ice cream recipe is given.

### Ingredients:

| Ingredients | Wt% of final product |
|---|---|
| Fat | 5.5 |
| MSNF | 10-12 |
| Sugar | 18-22 |
| Acacia gum | 0.2-0.5 |
| MSNF refers to a milk-solid-non-fat | |

### Example 3 A full fat frozen dairy dessert comprising a whey protein phospholipid concentrate and produced by standard freezing (not low temperature freezing) (not according to the invention)

In the following table an ice cream recipe is given.

### Ingredients:

| Ingredients | Wt% of final product |
|---|---|
| Fat | 10.5 |
| MSNF | 11-13 |
| Sugar | 18-22 |
| WPPC | 0.1-5 |
| MSNF refers to a milk-solid-non-fat | |
| WPPC refers to a whey protein phospholipid concentrate | |

### Example 4 A low fat frozen dairy dessert comprising a whey protein phospholipid concentrate and produced by low temperature freezing and acidification with glucono-delta-lactone.

### Ingredients:

| Ingredients | Wt% of final product |
|---|---|
| Fat | 5.5 |
| MSNF | 11-13 |
| Sugar | 18-22 |
| WPPC | 1-3 |
| MSNF refers to a milk-solid-non-fat | |
| WPPC refers to a whey protein phospholipid concentrate | |

### Example 5 Method of preparing confocal-microscopic pictures of samples of ice cream

Two grams of a melted ice cream are dispersed at room temperature in 20 grams of a dispersing medium. The dispersing medium is as follows:
- 1.25 vol% glacial acetic acid
- 3.755 vol% acetone
- 95 wt% glycerol (87%)

The ice cream sample and dispersing medium is placed in a dispersing device (Ikamag RTC) and stirred for one minute at a stirring rate adjusted to 33% of maximum rate of the stirrer. The dispersing device comprises a plastic vial and is 36 mm height and has an inner diameter of 32 mm. Inside the dispersing device, a specially designed stirring helix is placed. The stirring helix is made of a magnetic rod which length is 25 mm and is equipped with a double helix which is 31 mm width. For imaging of fat protein aggregates 0.5 gram of the product is allowed to melt at room temperature and mixed with 100 µl of a 50% (w/w) mixture of Nile red (0.06 mg/ml) in ethanol and Anilino sulfonic acid (ANS) in absolute ethanol. A 300 µl aliquot of the stained mixture is put into a Plexiglas observation chamber. The Plexiglas observation stage is 75x25x5 mm. The width of the observation chamber itself is 25 mm and its depth is 0.5-5 mm to adapt different kinds of specimens.

The observation chamber is placed onto the stage of a Zeiss LSM 710 confocal microscop. The 405 nm laser light is used to image the autoflourescence (bandwith 410-490) or the fluorescence of proteins stained by ANS, and the 561 nm laser light for fats stained by Nile red.

### Example 6 A comparative study of products with and without whey protein phospholipid concentrate (WPPC).

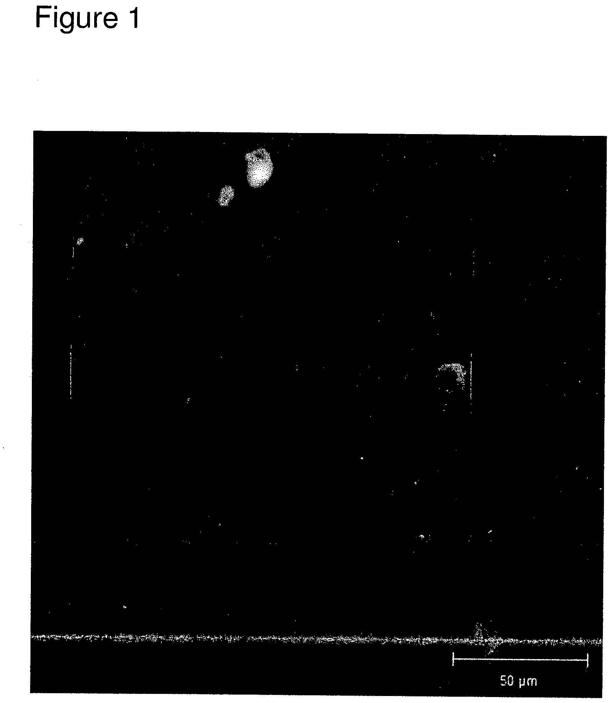

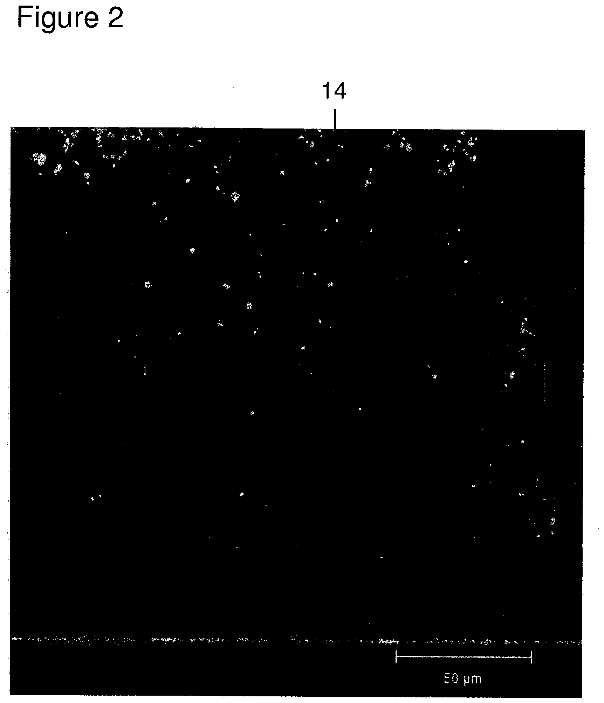

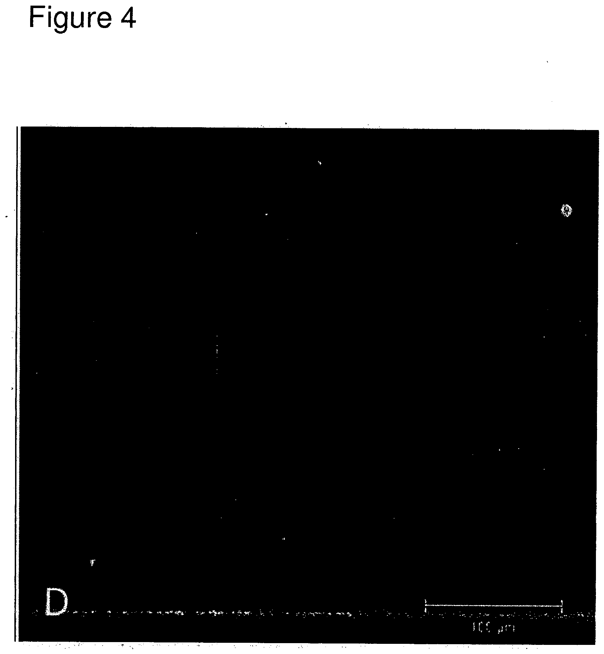

In this study, the full fat frozen dairy desserts of example 1 and 3 are compared. Microscopic pictures of both frozen dairy products has been made, which are shown in figure 1 and 2 respectively. In figure 1 is shown a microscopic picture of a full fat dairy dessert prepared by standard continuous freezing, i.e. not low temperature freezing and comprising a whey protein phospholipid concentrate (as in example 3). In figure 2 is shown a microscopic picture of a full fat dairy dessert prepared by standard continuous freezing, i.e. not low temperature freezing and comprising acacia gum as emulsifying agent (as in example 1). The pictures show the presence of fluorescent protein aggregation in the products. In figure 1 the protein aggregates are clearly shown by a bright layer (10) around the air cells (11), which in the picture looks like a ring-like structure. The size range of these protein aggregate rings lie in the range from 3 to 20 µm. Fat are shown as dark centres (12). Also fat to protein aggregates are shown (13). In figure 4 is also shown a microscopic picture of a full fat dairy dessert prepared by standard continuous freezing, i.e. not low temperature freezing and comprising a whey protein phospholipid concentrate (as in example 3). Figure 4 also shows a thick fat-protein layer on the air bubble interface and thus confirms what is observed in figure 1. On the other side, figure 2 (acacia gum instead of a whey protein phospholipid concentrate) shows no visible aggregates, but large fat globules (14). The fat globules are approximately 3 µm. When protein aggregates are shown in frozen dairy desserts it means that a product with good sensorial properties is obtained.

### Example 7 A comparative study of products with WPPC as compared to no WPPC but obtained by low temperature freezing/extrusion and acidification

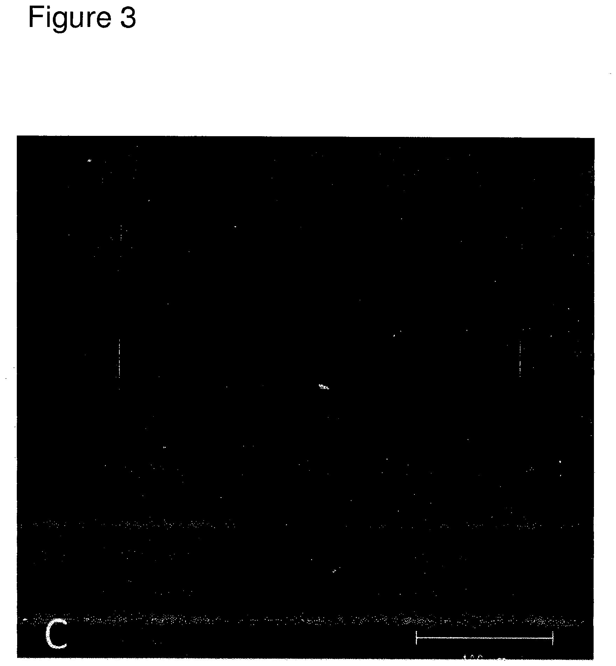

In this study of the full fat frozen dairy dessert of example 3 is compared to a low fat dairy dessert of example 2. Confocal microscopic pictures of example 2 is shown in figure 3.

In figure 3 a microscopic picture of a low fat dairy dessert prepared by standard freezing followed by low temperature freezing is shown, comprising acacia gum as emulsifying agent and where pH has been adjusted before pasteurization with glucono-delta-lactone (GDL). Figure 3 shows very little protein aggregation as compared to figure 1. This indicates that protein aggregation is better in products with WPPC than products with LTF and GDL-acidification but no WPPC. It is obvious that the thick protein layer seen in products produced according to the present invention (e.g. as in example 3) and visualized in figure 1 and 4 is not present at the air bubble interface in the microscopic picture shown in figure 3. Thus, if no WPPC is present, less protein aggregation is obtained.

### Example 8 Additional study of products with WPPC

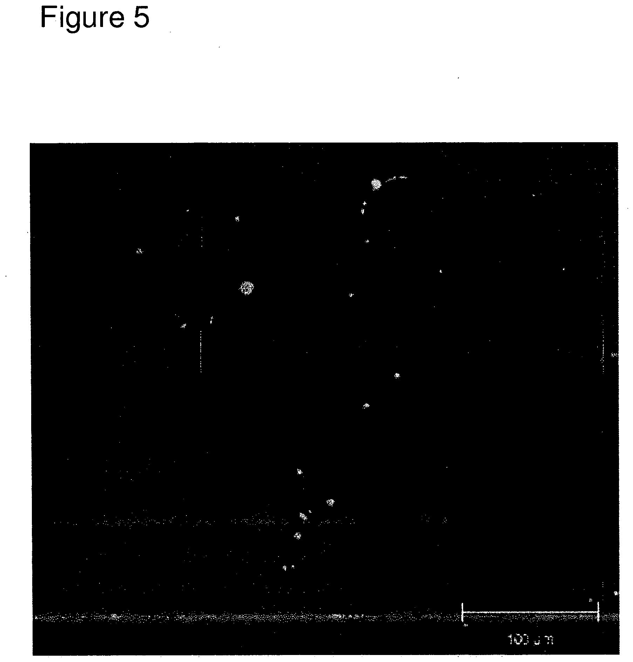

In Figure 5 a microscopic picture of the dairy dessert as disclosed in example 3 is shown. From the picture, it is clear that there is a thick protein layer in the dairy desserts where a whey protein phospholipid concentrate (WPPC) has been used as compared to when acacia gum has been used as an emulsifier (figure 2).

### Example 9 A comparative study of fat profile in products with and without whey protein phospholipid concentrate (WPPC).

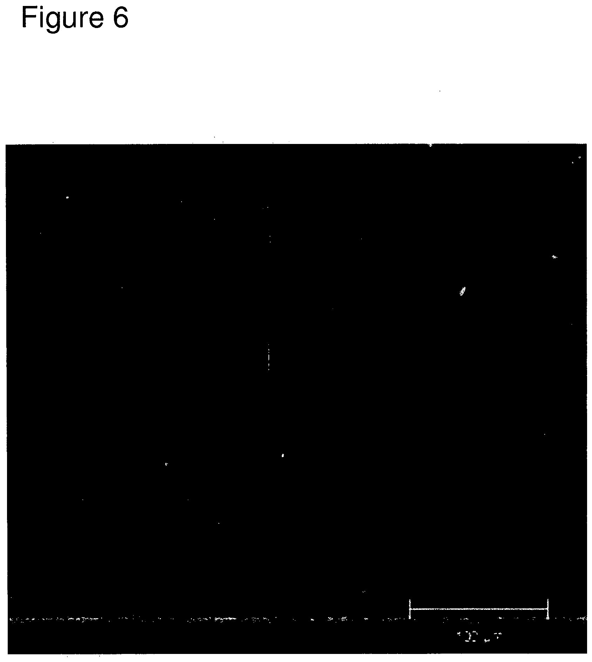

In figure 5 a microscopic picture of the dairy dessert as disclosed in example 3 is disclosed while a microscopic picture of a dairy dessert as disclosed in example 1 is disclosed in figure 6. Figure 5 and 6 shows fat globules and it is clearly shown that the product comprising WPPC (figure 5) has larger fat globules than the product without WPPC (figure 6). When a product has a cluster of fat globules or large fat globules, it will impart more creaminess into a product.

### Example 10 Air bubble analysis

Two grams of a melted ice cream are dispersed at room temperature in 20 grams of a dispersing medium. The dispersing medium is as follows:
- 1.25 vol% glacial acetic acid
- 3.755 vol% acetone
- 95 wt% glycerol (87%)

The ice cream sample and dispersing medium is placed in a dispersing device (Ikamag RTC) and stirred for one minute at a stirring rate adjusted to 33% of maximum rate of the stirrer. The dispersing device comprises a plastic vial and is 36 mm height and has an inner diameter of 32 mm. Inside the dispersing device, a specially designed stirring helix is placed. The stirring helix is made of a magnetic rod which length is 25 mm and is equipped with a double helix which is 31 mm width.

After dispersion, 300 µl of the sample is transferred to a glass microscope slide fitted with a steel ring of 35 mm diamter to form a well approximately 2 mm in depth. Bubbles are imaged by light microscopy (Olympus BH2 microscope) and their sizes are measured by image analysis. Numerical density of air bubbles refers to the total number of air bubbles detected by image analysis for a given number of images and initial sample weight.

In order to demonstrate the stability of invented products, a comparison was made between fresh and heat shocked products. The numerical air bubble density was determined for a sample of each product before and after heat shock (see Table 1).

Products are made as described in Examples 2 to 4. These are designated "fresh". Heat shocked samples were made by subjecting the samples to heat and allow to melt a little bit and refreeze the product. When heat shock happens, water molecules in the ice cream can join toether to form larger ice crystals, which can give the ice cream an icy, grainy texture. Heat shocked samples are designated "HS". The results are shown in Table 1.

**Table 1:**

| Product type | Numerical density of air bubbles |
|---|---|
| As in example 2, fresh | 2200 |
| As in example 2, HS | 1500 |
| As in example 4, fresh | 2700 |
| As in example 4, HS | 2250 |

The above table shows that the air bubble density is decreased after HS for both conventional products (Example 1) and invented products (Example 4). However, the decrease is greater in conventional products than the invented product, and the invented product retains an air bubble density after heat shock which is close to that of a fresh conventional product.

This indicates a better stability of the invented products.

The loss of density may also be described as percentage loss. See Table 2

**Table 2: Change in Numerical air bubble densities after heat shock**

| Product type | Change in Numerical air bubble density after heat shock (%) |
|---|---|
| Example 2, fresh vs HS | -32% |
| Example 4, fresh vs HS | - 16% |

The size of the air bubbles is also affected by heat shock.

**Table 3:**

| Product type | Air bubble diameter (µm) |
|---|---|
| Example 2, fresh | 31.87 |
| Example 2, HS | 34.76 |
| Example 4, fresh | 26 |
| Example 4, HS | 32.06 |

The smaller the air bubble size the slower they will coalesce (come together). This also indicates greater stability and preservation of pleasurable texture. As is seen from Table 3, Heat shock of conventional products (Example 2) lead to an increase in air bubble diameter. However, invented products of Example 4 show an air bubble size after heat shock which is on par with that of the fresh conventional product.

## Claims

1. A pasteurised frozen aerated confection product comprising one or more proteins and a whey protein phospholipid concentrate
wherein the amount of phospholipid in the whey protein phospholipid concentrate is at least 10% and
wherein the product is free of any artificial or non-natural emulsifier and the product is free of stabilizer, and the product is free of acacia gum and egg,
wherein the product further comprises a pH adjusting agent, and wherein the pH adjusting agent is Glucono-Delta-Lactone in an amount of 0.1 to 0.3% by weight,
wherein the product comprises the whey protein phospholipid concentrate in an amount of 0.1 to 10.0% by weight,
wherein the product has an overrun of 100 to 130%, and
wherein the product comprises from 0.5 to 16% fat by weight.

2. Product according to any of the preceeding claims, wherein the ratio between the whey protein phospholipid and pH adjusting agent is from 2:1 to 30:1.

3. The product according to any of the preceding claims, wherein the product is essentially or completely free of polysaccharides.

4. The product according to any of the preceding claims, wherein the product is obtainable by conventional freezing, by low-temperature extrusions and/or low temperature freezing.

5. A method of producing a frozen aerated confection product having an overrun of 100 to 130%, the method comprising the steps of:
a) providing an ingredient mix comprising
0.1 to 10% by weight of whey protein phospholipid concentrate wherein the amount of phospholipid in the whey protein phospholipid concentrate is at least 10%,
from 0.5 to 16% fat by weight and
0.1 to 0.3 % by weight of pH adjusting agent being Glucono-Delta-Lactone, and
the mix being free of any artificial or non-natural emulsifier and the mix being free of stabilizer, and the mix being free of acacia gum and egg;
b) homogenising the mix;
c) pasteurising the mix
d) freezing the pasteurised mix to form the aerated frozen confection product
e) optionally hardening the mix.

6. The method according to claim 5, wherein the freezing is made by using a standard continuous freezer followed by a low temperature freezing step.

7. The method according to any of claims 5 to 6, wherein the method further comprises a step of adjusting the pH of the mix before pasteurisation, in particular adjusting the pH to the range of 5.0 to 6.5.

8. The method according to any of claims 5 to 7, wherein the method further comprises a step of adjusting the pH of the mix after pasteurisation, in particular adjusting the pH to the range of 5.0 to 6.5.

## Patentansprüche

1. Pasteurisiertes, gefrorenes, mit Luft durchsetztes Konfektprodukt, das ein oder mehrere Proteine und ein Molkeproteinphospholipid-Konzentrat umfasst
wobei die Menge an Phospholipid in dem Molkeproteinphospholipid-Konzentrat mindestens 10 % beträgt und
wobei das Produkt frei von künstlichem oder nicht-natürlichem Emulgator und das Produkt frei von Stabilisator ist und das Produkt frei von Akaziengummi und Ei ist,
wobei das Produkt ferner ein Mittel zum Anpassen des pH-Werts umfasst und wobei das Mittel zum Anpassen des pH-Werts Glucono-Delta-Lacton in einer Menge von 0,1 bis 0,3 Gew.-% ist,
wobei das Produkt das Molkeproteinphospholipid-Konzentrat in einem Anteil von 0,1 bis 10,0 Gew.-% umfasst,
wobei das Produkt einen Lufteinschlag von 100 bis 130 % aufweist und wobei das Produkt zu 0,5 bis 16 Gew.-% Fett umfasst.

2. Produkt nach einem der vorstehenden Ansprüche, wobei das Verhältnis zwischen dem Molkeproteinphospholipid und dem Mittel zum Anpassen des pH-Werts von 2:1 bis 30:1 beträgt.

3. Produkt nach einem der vorstehenden Ansprüche, wobei das Produkt im Wesentlichen frei von Polysacchariden ist.

4. Produkt nach einem der vorstehenden Ansprüche, wobei das Produkt durch herkömmliches Gefrieren, Niedertemperaturextrusion und/oder Niedertemperaturgefrieren erhalten werden kann.

5. Verfahren zum Herstellen eines gefrorenen, mit Luft durchsetzten Konfektprodukts mit einem Lufteinschlag von 100 bis 130 %, wobei das Verfahren folgende Schritte umfasst:
a) Bereitstellen einer Inhaltsstoffmischung, umfassend
zu 0,1 bis 10 Gew.-% Molkeproteinphospholipid-Konzentrat, wobei die Menge von Phospholipid in dem Molkeproteinphospholipid-Konzentrat mindestens 10 % beträgt,
zu von 0,5 bis 16 Gew.-% Fett und
zu 0,1 bis 0,3 Gew.-% Mittel zum Anpassen des pH-Werts, das Glucono-Delta-Lacton ist, und
wobei die Mischung frei von künstlichem oder nicht-natürlichem Emulgator ist und die Mischung frei von Stabilisator ist und die Mischung frei von Akaziengummi und Ei ist;
b) Homogenisieren der Mischung;
c) Pasteurisieren der Mischung
d) Gefrieren der pasteurisierten Mischung, um das mit Luft durchsetzte, gefrorene Konfektprodukt zu bilden
e) wahlweise Härten der Mischung.

6. Verfahren nach Anspruch 5, wobei das Gefrieren unter Verwendung eines standardmäßigen kontinuierlichen Gefrierschranks und einem anschließenden Niedertemperatur-Gefrierschritt erfolgt.

7. Verfahren nach einem der Ansprüche 5 bis 6, wobei das Verfahren ferner einen Schritt zum Anpassen des pH-Werts der Mischung vor der Pasteurisierung umfasst, insbesondere das Anpassen des pH-Werts an einen Bereich von 5,0 bis 6,5.

8. Verfahren nach einem der Ansprüche 5 bis 7, wobei das Verfahren ferner einen Schritt zum Anpassen des pH-Werts der Mischung nach der Pasteurisierung umfasst, insbesondere das Anpassen des pH-Werts an den Bereich von 5,0 bis 6,5.

## Revendications

1. Produit de confiserie aéré congelé pasteurisé comprenant une ou plusieurs protéines et un concentré de phospholipide de protéines de lactosérum
dans lequel la quantité de phospholipide dans le concentré de phospholipide de protéines de lactosérum est d'au moins 10 % et
dans lequel le produit est exempt d'un quelconque émulsifiant artificiel ou non naturel et le produit est exempt d'agent stabilisant, et le produit est exempt de gomme d'acacia et d'œuf,
dans lequel le produit comprend en outre un agent d'ajustement de pH, et dans lequel l'agent d'ajustement de pH est une glucono-delta-lactone en une quantité de 0,1 à 0,3 % en poids,
dans lequel le produit contient le concentré de phospholipide de protéines de lactosérum en une quantité de 0,1 à 10,0 % en poids,
dans lequel le produit a un foisonnement de 100 à 130 %, et
dans lequel le produit comprend de 0,5 à 16 % de matière grasse en poids.

2. Produit selon l'une quelconque des revendications précédentes, dans lequel le rapport entre le phospholipide de protéines de lactosérum et l'agent d'ajustement de pH va de 2:1 à 30:1.

3. Produit selon l'une quelconque des revendications précédentes, dans lequel le produit est essentiellement ou entièrement exempt de polysaccharides.

4. Produit selon l'une quelconque des revendications précédentes, dans lequel le produit peut être obtenu par congélation conventionnelle, par extrusions à basse température et/ou congélation à basse température.

5. Procédé de production d'un produit de confiserie aéré congelé ayant un foisonnement de 100 à 130 %, le procédé comprenant les étapes consistant à :
a) fournir un mélange d'ingrédients comprenant
0,1 à 10 % en poids de concentré de phospholipide de protéines de lactosérum dans lequel la quantité de phospholipide dans le concentré de phospholipide de protéines de lactosérum est d'au moins 10 %,
de 0,5 à 16 % de matière grasse en poids et
0,1 à 0,3 % en poids d'agent d'ajustement de pH étant de la glucono-delta-lactone, et
le mélange étant exempt d'un quelconque émulsifiant artificiel ou non naturel et le mélange étant exempt d'agent stabilisant, et le mélange étant exempt de gomme d'acacia et d'oeuf ;
b) homogénéiser le mélange ;
c) pasteuriser le mélange
d) congeler le mélange pasteurisé pour former le produit de confiserie congelé aéré
e) facultativement durcir le mélange.

6. Procédé selon la revendication 5, dans lequel la congélation est obtenue par utilisation d'un congélateur en continu standard suivie d'une étape de congélation à basse température.

7. Procédé selon l'une quelconque des revendications 5 à 6, dans lequel le procédé comprend en outre une étape d'ajustement du pH du mélange avant la pasteurisation, en particulier d'ajustement du pH dans la plage de 5,0 à 6,5.

8. Procédé selon l'une quelconque des revendications 5 à 7, dans lequel le procédé comprend en outre une étape d'ajustement du pH du mélange après la pasteurisation, en particulier d'ajustement du pH dans la plage de 5,0 à 6,5.
